# EUROPEAN PATENT APPLICATION

(11) **EP 1 657 773 A1**
(43) Date of publication of application: **17.05.2006**
(21) Application number: 04748267.4
(22) Date of filing: 30.07.2004
(51) Int. Cl.: H01M 8/12, H01M 8/06, H01M 8/04

(54) **POWER GENERATOR BY SOLID ELECTROLYTIC FUEL CELL**

(30) Priority: 21.08.2003 JP 2003208246
(71) Applicant: SHINKO ELECTRIC INDUSTRIES CO., LTD., Nagano-shi, Nagano 381-2287 (JP)
(72) Inventor: HORIUCHI, Michio, Shinko Electric Ind. Co., Ltd., Nagano-shi, Nagano 3812287 (JP); SUGANUMA, Shigeaki, Shinko Electric Ind. Co., Ltd., Nagano-shi, Nagano 3812287 (JP); WATANABE, Misa, Shinko Electric Ind. Co., Ltd., Nagano-shi, Nagano 3812287 (JP)
(74) Representative: Finnie, Peter John
(86) International application number: PCT/JP2004/011296
(87) International publication number: WO 2005/020364

(57) **Abstract**

The present invention is directed to a power generating apparatus that uses, as a power supply means, a flat plate-like solid electrolyte fuel cell of the type that directly utilizes a flame produced by burning a solid fuel. The solid electrolyte fuel cell comprises a cathode layer formed on one surface of a flat plate-like solid electrolyte substrate and an anode layer formed on the opposite surface thereof. The flame produced by burning wood pieces as the solid fuel is applied over the entire surface of the anode layer. Air is supplied to the cathode layer which is disposed facing the atmosphere side, i.e., the opposite side from the flame. Radical components in the flame react with oxygen in the air, thus generating an electromotive force.

## Description

### TECHNICAL FIELD

The present invention relates to a power generating apparatus using a solid electrolyte fuel cell and, more particularly, to a power generating apparatus using a solid electrolyte fuel cell that can generate power utilizing a flame produced by burning a solid fuel and that is easy to handle for storage, transport, etc., wherein the solid electrolyte fuel cell is fabricated by forming a cathode layer and an anode layer on a solid electrolyte substrate and by employing a simple structure that does not require hermetic sealing and thereby achieving a compact and thin construction.

### BACKGROUND ART

Heretofore, fuel cells have been developed and commercially implemented as low-pollution power generating means to replace traditional power generating means such as thermal power generation, or as electric energy sources for electric vehicles that replace traditional engines, which use gasoline or the like as the fuel, with electric motors. For such fuel cells, much research effort has been expended to increase the efficiency and to reduce the cost.

Fuel cells can be classified into various types according to the method of power generation, one being the type of fuel cell that uses a solid electrolyte. In one example of the fuel cell that uses a solid electrolyte, a calcined structure made of yttria(Y₂O₃)-doped stabilized zirconia is used as an oxygen ion conducting solid electrolyte layer. This fuel cell comprises a cathode layer formed on one surface of the solid electrolyte layer and an anode layer on the opposite surface thereof, and oxygen or an oxygen-containing gas is fed to the cathode layer, while a fuel gas such as methane is fed to the anode layer.

In this fuel cell, the oxygen (O₂) fed to the cathode layer is converted into oxygen ions (O²⁻) at the boundary between the cathode layer and the solid electrolyte layer, and the oxygen ions are conducted through the solid electrolyte layer into the anode layer where the ions react with the fuel gas, for example, a methane gas (CH₄), fed to the anode layer, producing water (H₂O), carbon dioxide (CO₂), hydrogen (H₂), and carbon monoxide (CO). In this reaction process, the oxygen ions release electrons, and a potential difference therefore occurs between the cathode layer and the anode layer. Here, when the cathode layer and the anode layer are electrically connected by a lead wire, the electrons in the anode layer flow into the cathode layer via the lead wire, and the fuel cell thus generates electricity. The operating temperature of this fuel cell is about 1,000°C.

However, this type of fuel cell requires the provision of separate chambers, one being an oxygen or oxygen-containing gas supply chamber on the cathode layer side and the other a fuel gas supply chamber on the anode layer side; furthermore, as the fuel cell is exposed to oxidizing and reducing atmospheres at high temperatures, it has been difficult to increase the durability of the fuel cell.

On the other hand, there has been developed a fuel cell of the type that comprises a cathode layer and an anode layer formed on opposite surfaces of a solid electrolyte layer, and that generates an electromotive force between the cathode layer and the anode layer by placing the fuel cell in a fuel gas mixture consisting of a fuel gas, for example, a methane gas, and an oxygen gas. The principle of generating an electromotive force between the cathode layer and the anode layer in this type of fuel cell is the same as that for the above-described separate-chamber type fuel cell but, as the entire fuel cell can be placed in substantially the same atmosphere, the fuel cell can be constructed as a single-chamber type cell to which the fuel gas mixture is supplied, and the durability of the fuel cell can be increased.

However, in this single-chamber fuel cell also, as the fuel cell has to be operated at a high temperature of about 1000°C, there is the danger that the fuel gas mixture may explode. Here, if the oxygen concentration is reduced to a level lower than the ignitability limit to avoid such danger, there arises the problem that carbonization of the fuel such as methane progresses and the fuel cell performance degrades. In view of this, there has been proposed, for example, in Japanese Unexamined Patent Publication No. 2003-92124, a single-chamber fuel-cell battery that can use a fuel gas mixture whose oxygen concentration is controlled so as to be able to prevent the progress of carbonization of the fuel, while at the same time, preventing the explosion of the fuel gas mixture.

The above proposed fuel-cell battery is of the type that is constructed by housing individual fuel cells in a single chamber; on the other hand, there has been proposed an apparatus that generates power by placing a solid electrolyte fuel cell in or near a flame and thereby holding the solid electrolyte fuel cell at its operating temperature. Such a power generating apparatus is proposed, for example, in Japanese Unexamined Patent Publication No. H06-196176.

In the above-described single-chamber fuel-cell battery, there is no need to strictly separate the fuel and the air, as was the case with conventional solid electrolyte fuel-cell batteries, but instead, a hermetically sealed construction must be employed. Further, to increase the electromotive force, a plurality of plate-like solid electrolyte fuel cells are stacked one on top of another and connected together using an interconnect material having high heat resistance and high electrical conductivity so as to be able to operate at high temperatures. As a result, the single-chamber fuel-cell battery constructed from a stack of plate-like solid electrolyte fuel cells has the problem that the construction is not only large but also costly. Furthermore, as the temperature is gradually raised to the high operating temperature in order to prevent cracking of the solid electrolyte fuel cells, this type of single-chamber fuel-cell battery requires a long startup time, thus requiring extra time and labor to operate.

In contrast, the above-described power generating apparatus employs a solid electrolyte fuel cell of the type that directly utilizes a flame; this type of fuel cell has the characteristic of being an open type, the solid electrolyte fuel cell not needing to be housed in a hermetically sealed container. As a result, this type of fuel cell can reduce the startup time, is simple in structure, and is therefore advantageous when it comes to reducing the size, weight, and cost of the fuel cell. Further, as the flame is directly used, this type of fuel cell can be incorporated in a conventional combustion apparatus or an incinerator or the like, and is thus expected to be used as a power supply apparatus.

However, in this type of fuel cell, as the anode layer is formed on the outer circumference of a tubular solid electrolyte layer, radical components due to the flame are not supplied, in particular, to the lower half of the anode layer, and effective use cannot be made of the entire surface of the anode layer formed on the outer circumference of the tubular solid electrolyte layer. This has degraded the power generation efficiency. There has also been the problem that, as the solid electrolyte fuel cell is directly heated by the flame, cracking tends to occur due to abrupt changes in temperature, and the solid electrolyte fuel cell, if cracked, eventually disintegrates into pieces, resulting in inability to generate power.

Accordingly, it is an object of the present invention to provide a power generating apparatus using a solid electrolyte fuel cell as a handy power supply means wherein improvements in durability and power generation efficiency and reductions in size and cost are achieved by employing a solid electrolyte fuel cell of the type that directly utilizes a flame produced by burning a solid fuel, and by making provisions to apply the flame over the entire surface of the anode layer formed on the solid electrolyte layer.

### DISCLOSURE OF THE INVENTION

To solve the above problem, the present invention provides a power generating apparatus, using a solid electrolyte fuel cell, wherein the solid electrolyte fuel cell is fabricated by forming a cathode layer on one surface of a flat plate-like solid electrolyte substrate and an anode layer on a surface thereof opposite to the one surface, and a solid fuel is placed below the solid electrolyte fuel cell, and wherein the power generating apparatus generates power by supplying a flame produced by combustion of the solid fuel to the anode layer, while supplying air to the cathode layer; here, a wood material, a solid fuel made of paraffin, or a solid fuel made of alcohol is used as the solid fuel.

Preferably, air is supplied to a burning portion of the solid fuel, and the solid fuel is placed inside a combustion apparatus having an opening through which the flame is supplied to the anode layer, wherein the combustion apparatus has an air intake opening.

Further, when the solid fuel is made of solid paraffin, air is supplied to the burning portion through a tube passed through the solid paraffin.

The combustion apparatus further comprises a heating means for heating the solid fuel and an air supply means for supplying air into the combustion apparatus, wherein the solid fuel is burned in the presence of the air to produce a volatile compound, and the flame produced by combustion of the volatile compound is supplied to the solid electrolyte fuel cell.

### BRIEF DESCRIPTION OF THE DRAWINGS

The present invention will be described below with reference to the accompanying drawings.

Figures 1A and 1B are diagrams for explaining an embodiment of a power generating apparatus using a solid electrolyte fuel cell according to the present invention.

Figures 2A and 2B are diagrams for explaining another embodiment of a power generating apparatus using a solid electrolyte fuel cell according to the present invention.

Figure 3 is a diagram for explaining still another embodiment of a power generating apparatus using a solid electrolyte fuel cell according to the present invention.

Figure 4 is a diagram for explaining an embodiment in which the production of a flame is improved in a power generating apparatus using a solid electrolyte fuel cell according to the present invention.

Figures 5A and 5B are schematic diagrams for explaining the structures of prior art solid electrolyte fuel-cell batteries that use a fuel gas mixture.

Figure 6 is a diagram for explaining the structure of a prior art solid electrolyte fuel cell that uses a flame.

### EMBODIMENTS OF THE INVENTION

Embodiments of a power generating apparatus using a solid electrolyte fuel cell according to the present invention will be described below with reference to the drawings. However, before proceeding to the description of the power generating apparatus using the solid electrolyte fuel cell according to the present invention, prior art solid electrolyte fuel cells, which provide the basis for the power generating apparatus using the solid electrolyte fuel cell according to the present invention, will be described in order to clarify the features and advantages of the present embodiment.

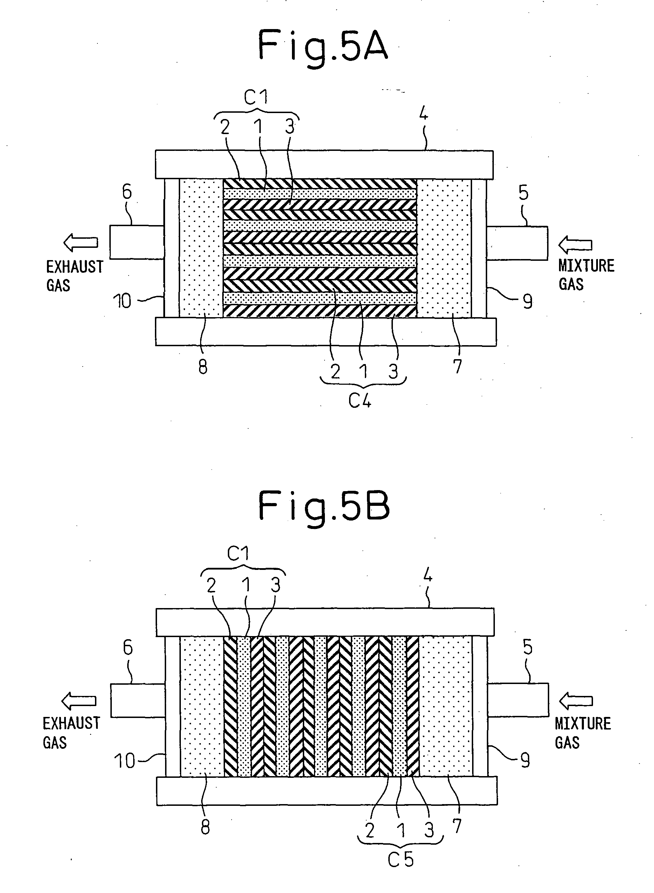

Figures 5A and 5B show the structures of the single-chamber fuel-cell batteries proposed in the prior art. The fuel-cell battery shown in Figure 5A has a structure in which individual fuel cells each containing a solid electrolyte layer are stacked one on top of another with each cell oriented parallel to the flow direction of the fuel gas mixture. Each fuel cell comprises a solid electrolyte layer 1 of a closely compacted structure and a cathode layer 2 and an anode layer 3 as porous layers formed on opposite surfaces of the solid electrolyte layer 1, and the plurality of fuel cells C1 to C4 of identical structure are stacked in a ceramic container 4. Then, the fuel cells are hermetically sealed in the container 4 by adding packing fillers 7 and 8 and closing the container with end plates 9 and 10.

The container 4 is provided with a supply pipe 5 for supplying the fuel gas mixture containing oxygen and a fuel such as methane and an exhaust pipe 6 for removing the exhaust gas. Vacant spaces in the container 4, where the fuel gas mixture and the exhaust gas flow, i.e., the areas in the container 4 other than the area occupied by the fuel cells, are filled with the fillers 7 and 8, and a suitable gap is provided therebetween; therefore, when the fuel-cell battery is operated, if a fuel gas mixture within the ignitability limit is present, the fuel gas mixture does not ignite.

The basic structure of the fuel-cell battery shown in Figure 5B is the same as that of the single-chamber fuel-cell battery shown in Figure 5A, except that the individual fuel cells each containing a solid electrolyte layer are stacked in the axial direction of the container 4 with each cell oriented perpendicularly to the flow direction of the fuel gas mixture. In this case, each fuel cell comprises a solid electrolyte layer 1 of a porous structure and a cathode layer 2 and an anode layer 3 as porous layers formed on opposite surfaces of the solid electrolyte layer 1, and the plurality of fuel cells C1 to C5 of identical structure are stacked in the container 4.

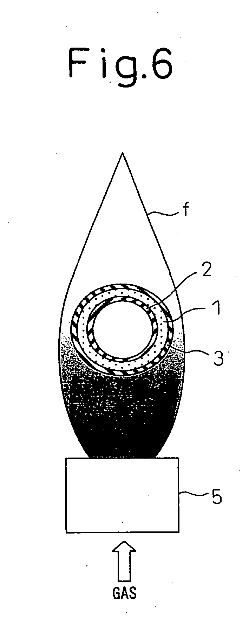

On the other hand, a power generating apparatus using a fuel cell that is not housed in a single chamber but directly utilizes a flame, as previously described, is shown in Figure 6. The fuel cell used in the power generating apparatus shown in Figure 6 comprises a zirconia solid electrolyte layer 1 formed in a tubular structure, an anode layer 3 as a fuel electrode formed on the outer circumference of the tubular structure, and a cathode layer 2 as an air electrode formed on the inner circumference of the tubular structure. This solid electrolyte fuel cell is placed with its anode layer 3 exposed to a reducing flame portion of a flame f generated from a combustion apparatus 5 to which the fuel gas is supplied. In this arrangement, radical components, etc. present in the reducing flame are utilized as the fuel, while air is supplied by convection or diffusion to the cathode layer 2 inside the tubular structure, and the fuel cell thus generates power.

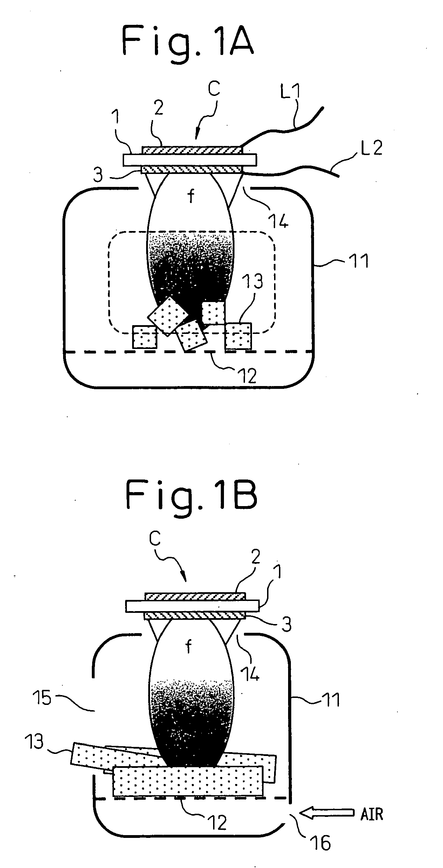

Next, an embodiment of the power generating apparatus using the solid electrolyte fuel cell according to the present invention will be described with reference to the drawings. Figures 1A and 1B show the structure of the power generating apparatus using the solid electrolyte fuel cell according to the present embodiment. Figure 1A shows a vertical cross-sectional view of the power generating apparatus, and Figure 1B shows a vertical cross-sectional view as viewed from a direction at right angles to the direction of view in Figure 1A.

In the prior art solid electrolyte fuel cell that directly utilizes a flame, as the solid electrolyte layer is formed in the shape of a tube, it has not been possible to apply the flame efficiently to the anode layer formed on the outer circumference of the solid electrolyte layer. In contrast, the solid electrolyte fuel cell used in the power generating apparatus of the present embodiment employs a solid electrolyte layer formed in the shape of a plate, for example, a thin plate-like solid electrolyte substrate. Then, a cathode layer (air electrode layer) and an anode layer (fuel electrode layer) are respectively formed on opposite surfaces of the solid electrolyte substrate, and a solid fuel supplied below the anode layer is burned so that the flame is applied over the entire surface of the anode layer. A readily available solid fuel, such as a wood material, wood chips or pellets, paraffin, olefin, alcohol, etc. can be used as the solid fuel here.

As shown in Figures 1A and 1B, the solid electrolyte fuel cell C used in the power generating apparatus of the present embodiment comprises the flat plate-like solid electrolyte substrate 1 and the cathode layer 2 (air electrode layer) and anode layer 3 (fuel electrode layer) formed on opposite surfaces of the solid electrolyte substrate 1, and electromotive force extracting lead wires L1 and L2 are attached to the cathode layer 2 and the anode layer 3, respectively. The solid electrolyte fuel cell C is placed above a combustion apparatus 11.

The combustion apparatus 11 has a combustion chamber that can accommodate the solid fuel 13 therein, and a holder 12 such as a grate for holding the solid fuel is provided inside the combustion chamber. In Figures 1A and 1B, a wood material is supplied as the solid fuel. There is also provided a flame opening 14 which supports the fuel cell C, and through which the anode layer 3 of the fuel cell C is exposed to the flame produced in the combustion chamber. In the front of the combustion apparatus 11 is formed a solid fuel supply opening 15 through which the solid fuel 13 is supplied into the combustion chamber, while an air intake opening 16 through which air is supplied is formed below the solid fuel holder 12.

Here, the solid fuel 13 is supplied into the combustion chamber of the combustion apparatus 11, and the flame f is produced by the combustion of the solid fuel. The flame f thus produced is applied over the anode layer 3 of the solid electrolyte fuel cell C that faces the opening 14, while the outside air is fed to the cathode layer 2. In this condition, the radical components in the flame react with the oxygen in the air, generating an electromotive force between the lead wires L1 and L2, and the apparatus thus functions as a power generating apparatus using the solid electrolyte fuel cell. Here, the flame generating conditions are chosen so that the flame f produced by the combustion is uniformly applied over the entire surface of the anode layer 3 and so that the radical components in the flame are fed to the anode layer in an optimum condition.

Next, the detailed structure of the solid electrolyte fuel cell C used in the generating apparatus of the present embodiment will be described. As shown in Figures 1A and 1B, the solid electrolyte fuel cell C of the present embodiment is formed in a flat plate-like structure, with the cathode layer 2 formed on one surface of the solid electrolyte substrate 1 and the anode layer 3 on the opposite surface thereof. As the cathode layer 2 and the anode layer 3 are formed in this way, when the anode layer 3 is disposed so as to face the side exposed to the flame f produced by the combustion of the solid fuel 13, then it follows that the cathode layer 2 is disposed so as to face the atmosphere.

As the fuel cell C of the present embodiment is formed in a flat plate-like shape as described above, the flame can be applied uniformly compared with the tubular type solid electrolyte fuel cell shown in Figure 6; furthermore, as the anode layer 3 is disposed so as to face the flame side, hydrocarbons, hydrogen, radicals (OH, CH, C₂, O₂H, CH₃), etc. present in the flame can be easily utilized as the fuel.

The flat plate-like structure has the further effect of being able to completely block the flame and, when the anode layer 3 is placed facing the flame side, then the cathode layer 2 is exposed to the atmosphere, as shown in Figures 1A and 1B. As a result, while the fuel cell C has an open type structure, it becomes easier for the cathode layer 2 to utilize the oxygen in the atmosphere, and the oxygen-rich condition can thus be maintained. In this case, an oxygen-containing gas (air, oxygen-rich gas, etc.) may be fed to the cathode layer 2 in order to enhance the oxygen utilization efficiency of the cathode layer 2.

The fuel cell C is disposed above the solid fuel 13 and, more preferably, the fuel cell C is disposed so that the anode layer 3 is exposed to the reducing flame near the base of the flame. When the anode layer 3 is disposed so as to be exposed to the reducing flame, hydrocarbons, hydrogen, radicals, etc. present in the reducing flame can be efficiently utilized as the fuel; furthermore, the anode layer can be used in a good condition even if it easily tends to degrade due to oxidation, and the durability can thus be maintained.

For the solid electrolyte substrate 1, known materials can be used, examples including the following:
a) YSZ (yttria-stabilized zirconia), ScSZ (scandia-stabilized zirconia), and zirconia-based ceramics formed by doping these materials with Ce, Al, etc.
b) SDC (samaria-doped ceria), GDC (gadolinium-doped ceria), and other ceria-based ceramics.
c) LSGM (lanthanum gallate) and bismuth oxide-based ceramics.

For the anode layer 3, known materials can be used, examples including the following:
d) Cermet of nickel and a ceramic based on yttria-stabilized zirconia or scandia-stabilized zirconia or a ceramic based on ceria (SDC, GDC, YDC, etc.).
e) Sintered material composed principally of electrically conductive oxide (50% to 99% by weight) (an electrically conductive oxide is, for example, nickel oxide with lithium dissolved in it).
f) A material given in d) or e) to which a metal made of a platinum-group element or rhenium or its oxide is added in an amount of 1% to 10% by weight.

Of these materials, d) and e) are particularly preferable.

The sintered material composed principally of electrically conductive oxide given in e) has excellent oxidation resistance, and therefore, can prevent a phenomena resulting from the oxidation of the anode layer, such as separation of the anode layer from the solid electrolyte layer and degradation of power generation efficiency or inability to generate power due to a rise in the electrode resistance of the anode layer. For the electrically conductive oxide, lithium-dissolved nickel oxide is preferred. It will also be noted that a high power-generation performance can be obtained by adding a platinum-group metal or rhenium or its oxide to the material given in d) or e).

For the cathode layer 2, known materials can be used and examples include lanthanum manganite doped with an element, such as strontium (Sr), from group III of the periodic table (for example, lanthanum strontium manganite) and a lanthanum gallium oxide or cobalt oxide compound doped with such an element (for example, lanthanum strontium cobaltite).

In the present embodiment, not only the cathode layer 2 and the anode layer 3 but also the solid electrolyte substrate 1 of the solid electrolyte fuel cell C is formed in a porous structure. The solid electrolyte substrate 1 used in the present embodiment may be formed in a closely compacted structure, as in the prior art, but in that case, its thermal shock resistance would drop, and the substrate would tend to crack easily when subjected to abrupt temperature changes. Furthermore, as the solid electrolyte layer generally is formed thicker than the anode layer or the cathode layer, any crack in the solid electrolyte layer would lead to the formation of cracks in the entire structure of the solid electrolyte fuel cell which would eventually disintegrate in pieces.

When the solid electrolyte substrate is formed in a porous structure, its thermal shock resistance increases, and defects such as cracking do not occur even when the substrate is subjected, during power generation, to abrupt temperature changes associated with the ignition or extinguishment of the flame or to a heat cycle involving rapid changes in temperature. Further, when the porous structure was fabricated with a porosity of less than 10%, no appreciable improvement in thermal shock resistance was observed, but when the porosity was 10% or higher, good thermal shock resistance was observed, and a better result was obtained when the porosity was increased to 20% or higher. This is presumably because, when the solid electrolyte layer is formed in a porous structure, thermal expansion due to heating is absorbed by the pores in the porous structure.

The solid electrolyte fuel cell is fabricated, for example, in the following manner. First, powders of materials for forming the solid electrolyte layer are mixed in prescribed proportions, and the mixture is molded into a flat plate shape. After that, the flat plate structure is calcined and sintered to produce the substrate which functions as the solid electrolyte layer. Here, by adjusting the kinds and proportions of the powder materials including a pore-forming agent and the calcination conditions such as calcination temperature, calcination time, preliminary calcination, etc., solid electrolyte layers with various porosities can be produced. A paste for forming the cathode layer is applied over one surface of the substrate thus obtained as the solid electrolyte layer, and a paste for forming the anode layer is applied over the other surface thereof; then, the entire structure is calcined to complete the fabrication of the solid electrolyte fuel cell.

The durability of the solid electrolyte fuel cell can be further enhanced as will be described hereinafter. This durability enhancing technique involves embedding a metal mesh in, or fixing a metal mesh to, each of the cathode layer 2 and the anode layer 3 in the flat plate-like fuel cell C shown in Figures 1A and 1B. In the case of the embedding method, the material (paste) for forming each layer is applied over the solid electrolyte layer, and the metal mesh is embedded in the thus applied material, which is then calcined. In the case of the fixing method, the metal mesh is not completely embedded in each layer material but may be glued to it, followed by calcining.

For the metal mesh, a material that has excellent heat resistance, and that well matches the thermal expansion coefficient of the cathode layer and anode layer which the metal mesh is to be embedded in or fixed to, is preferred. Specific examples include a platinum metal and a platinum-containing metal alloy formed in the shape of a mesh. Alternatively, stainless steel of SUS 300 series (304, 316, etc.) or SUS 400 series (430, etc.) may be used; these materials are advantageous in terms of cost.

Instead of using the metal mesh, metal wires may be embedded in or fixed to the anode layer and the cathode layer. The metal wires are formed using the same metal material as that used for the metal mesh, and the number of wires and the configuration of the wire arrangement are not limited to any particular number or configuration.

The metal meshes or metal wires embedded in or fixed to the anode layer and the cathode layer serve to reinforce the structure so that the solid electrolyte layer, if cracked due to its thermal history, etc., will not disintegrate into pieces; furthermore, the metal meshes or the metal wires act to electrically connect cracked portions.

The above description has been given by dealing with the case where the solid electrolyte substrate is formed in a porous structure, but it will be recognized that a closely compacted structure can be employed for the solid electrolyte substrate of the fuel cell of the present embodiment; in that case, the metal meshes or the metal wires embedded in or fixed to the cathode layer and the anode layer provide particularly effective means to cope with the problem of cracking due to thermal history.

The metal mesh or the metal wires may be provided in both the anode layer and the cathode layer or in either one of the layers. Further, the metal mesh and the metal wires may be used in combination. When the metal mesh or the metal wires are embedded at least in the anode layer, then if cracking occurs due to thermal history, the power generation performance of the fuel cell does not degrade and the fuel cell can continue to generate power. As the power generation performance of the solid electrolyte fuel cell is largely dependent on the effective area of the anode layer as the fuel electrode, the metal mesh or the metal wires should be provided at least at the anode layer.

When the solid electrolyte fuel cell having the above structure is installed as the solid electrolyte fuel cell C in the power generating apparatus shown in Figures 1A and 1B, and is arranged so as to be exposed to the flame produced by the combustion of the solid fuel, then the fuel cell can be used as an open-type power generating means that does not require a hermetically sealed construction. Further, as the solid fuel is used as the flame supply source, the power generating apparatus is simple in construction and easy to store and transport and thus provides a handy means for power generation.

This power generating apparatus is used advantageously for the generation of small amounts of power, and is suitable for use as a power supply for driving a load that does not require much current but for which a voltage is important. Such loads include, for example, LEDs, LCDs, portable radios, and portable information apparatuses, and the power generating apparatus can be used, for example, as an emergency power supply in the event of a power failure or as a power supply for outdoor activities.

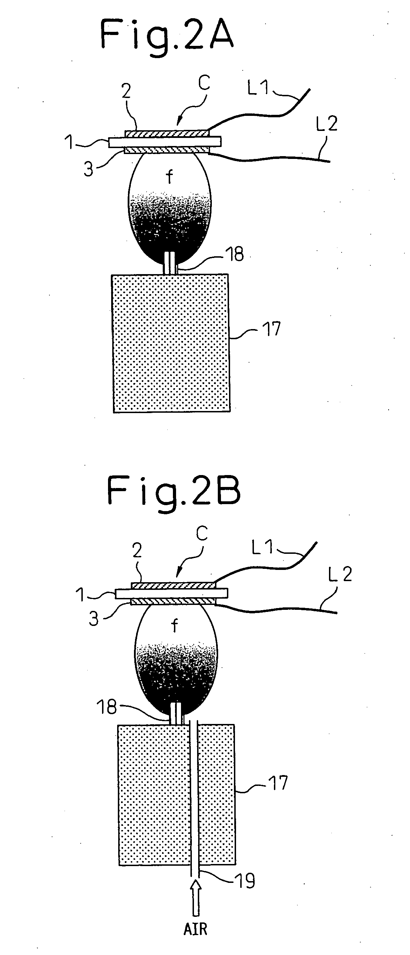

In the power generating apparatus using the solid electrolyte fuel cell shown in Figures 1A and 1B, a wood material has been used as the solid fuel; on the other hand, Figures 2A and 2B show an example in which paraffin is used as the solid fuel. Here, a candle can be given as an example of the solid fuel made of paraffin. The combustion apparatus 11 such as shown in Figures 1A and 1B is not shown in Figures 2A and 2B, but the power generating apparatus can also be achieved by just exposing the solid electrolyte fuel cell C to the flame of the candle.

Figure 2A shows the condition in which the solid electrolyte fuel cell C with its anode layer 3 facing down is disposed above the candle 17 whose wick 18 is producing the flame. The position of the fuel cell C is adjusted so that the entire surface of the anode layer 3 will be exposed to the flame f produced by the wick 18. The radical components contained in the frame F can then be supplied effectively to the anode layer 3, and the radical components react with the oxygen in the air fed to the cathode layer 2, generating an electromotive force between the lead wires L1 and L2.

Figure 2B shows the case where a candle is used as the solid fuel, as in the case of Figure 2A, but differs in that an end of a tube 19 extending from the bottom is disposed near the wick 18 of the candle 17. By feeding air through the tube 19, the combustion condition in the burning portion of the candle 17 can be changed, and the radical components in the flame f can thus be increased. This serves to enhance the power generation efficiency.

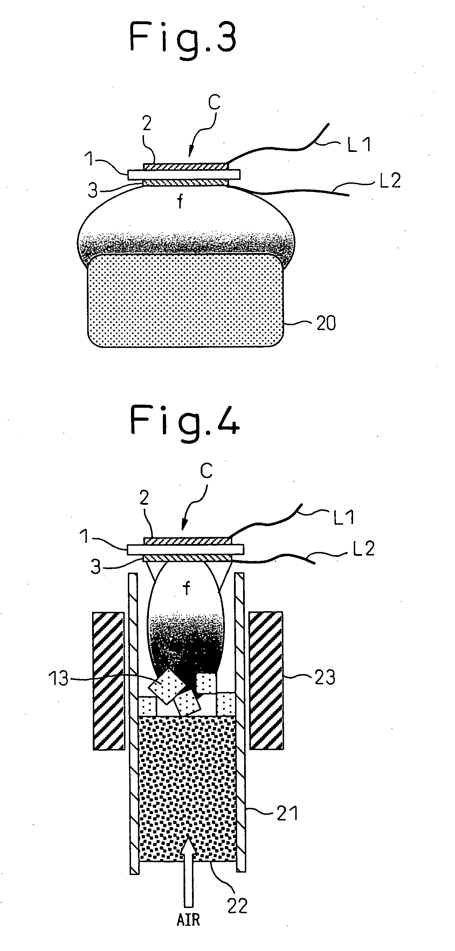

While Figures 2A and 2B have shown an example of the power generating apparatus that uses a candle as the solid fuel, Figure 3 hereinafter given shows an example in which, instead of the candle, a solid fuel made of alcohol is used as the solid fuel for the power generating apparatus. This solid fuel, compared with the candle, offers the advantages that the amount of soot can be reduced, that the flame f is stable, and that the area of the anode layer 3 can be increased; this not only allows the solid electrolyte fuel cell to be used over an extended period of time, but also serves to enhance the power generation efficiency.

The substrate of the solid electrolyte fuel cell used in the power generating apparatus of the present embodiment should be formed in such a shape that the flame can be applied effectively over the entire surface of the anode layer. For example, when a candle is used as the solid fuel, it will be advantageous to form the anode layer in a circular shape; in this case, the solid electrolyte substrate can be formed in a circular shape that matches the shape of the anode layer.

When it is desired to increase the power generation output, the fuel cell should be constructed using a larger-area solid electrolyte substrate, and the flame should be produced so as to match the size of the fuel cell. Further, when it is desired to increase the electromotive force of the fuel cell, the cathode layer and the anode layer formed on opposite sides of the solid electrolyte substrate should each be split into a plurality of segments, forming a plurality of fuel cell units each comprising a cathode layer segment and an anode layer segment thus split. Then, these fuel cell units can be connected in series by metal wires.

As earlier described, the air intake opening 16 is formed in the lower part of the combustion apparatus 11 in the power generating apparatus shown in Figure 1B in which the flame produced by the combustion of the solid fuel is supplied to the solid electrolyte fuel cell. The air necessary for natural combustion of the solid fuel 13 is supplied through the air intake opening 16 into the combustion apparatus 11, that is, the air is introduced into the combustion apparatus 11 by natural convection. When the air is supplied in this manner, the radical components in the flame that contribute to the power generation of the fuel cell can be produced or fuel species can be extracted from the solid fuel, but it is not possible to make adjustments to optimize the flame produced by the combustion so as to effectively contribute to the power generation of the fuel cell.

On the other hand, in Figure 2B, an end of the tube 19 is disposed near the wick 18 of the candle 17. By feeding air through the tube 19 to the flame f, the combustion condition in the burning portion of the candle 17 can be changed, and the radical components in the flame f can thus be increased; this serves to enhance the power generation efficiency. When the flame produced by the combustion of the candle is used, as the candle itself is a solid fuel of paraffin, the condition of the flame being produced by the flame can be optimized relatively easily by adjusting the supply of the air through the tube 19.

However, when using such substances as a wood material, biomass, etc. as the solid fuel, since these kinds of solid fuel are composed of various different components, the combustion is not uniform, and besides, they cannot be effectively utilized as fuel species. For example, if the wood material 13 is burned in the combustion apparatus shown in Figure 1B, soot is produced due to incomplete combustion, or an appreciable amount of residue, such as ashes, is produced.

In view of this, when using a substance such as a wood material, biomass, etc. as the solid fuel, provisions are made to extract the various components contained in such solid fuels as volatile compounds and to produce the flame by burning the volatile compounds. By so doing, the various components contained in the solid fuels can be effectively utilized as fuel species without reforming them; furthermore, the radical components in the flame can be increased and the power generation efficiency of the fuel cell enhanced without reforming the fuel species.

For example, it has been confirmed by experiment that when pellets made of a conventional wood material are heated in the air, the total weight of the pellets abruptly decreases when the pellet temperature reaches about 500°C. It has been found through analysis that volatile compounds account for about 80% of the amount of decrease and nonvolatile components account for about 19%. The nonvolatile components include tar, coke, etc. The volatile compounds extracted here are used as fuel species and burned to generate radical components. The radical components to be produced in the flame can be optimized by adjusting the amount of air necessary for the combustion of the volatile compounds.

Figure 4 shows a specific example of the power generating apparatus which is adapted to use a wood material as the solid fuel and to supply to the fuel cell the flame produced by burning the volatile compounds generated from the wood pellets. In the power generating apparatus shown in Figures 1A and 1B, the wood material 13 was simply placed on the grate 12 and was burned by the air supplied through the air intake opening 16. In contrast, in the power generating apparatus of Figure 4, a heat resistant container 21 made of alumina ceramic or the like, which corresponds to the combustion apparatus, is used, and a porous member 22 that serves as a substitute for the grate is placed in the lower part of the container, to form the combustion chamber. Further, a heater 23, as a heating means, is provided around the outer circumference of the upper part of the heat resistant container 21. Then, the fuel cell C with its anode layer 3 facing down is placed over the opening in the top of the heat resistant container 21.

The wood material 13 is placed on the porous member 22 inside the combustion chamber within the heat resistant container 21. In this condition, the wood material 13 is heated by the heater 23, and air is supplied through the porous member 22 into the combustion chamber. For example, while the air is being supplied to the wood material 13 by suitably adjusting the amount of the air, the heater 23 is driven to heat the wood material 13 up to about 500°C. Then, the flame f is produced by burning the volatile compounds generated from the wood material 13, and this flame f supplies the radical components to the anode layer 3 of the fuel cell C.

As described above, according to the power generating apparatus shown in Figure 4, as the heating means is provided around the outer circumference of the combustion apparatus containing the solid fuel, and a suitable amount of air is supplied to the combustion chamber, volatile compounds that can be burned can be extracted effectively from the solid fuel without requiring the provision of a large-scale reformer. As a result, the flame produced by burning the volatile compounds can be applied to the fuel cell, and the amount of radical components to be supplied to the fuel cell can thus be increased, increasing the power generation output of the fuel cell.

Working examples of the power generating apparatus using the solid electrolyte fuel cell of the present embodiment described above will be shown below.

### Working example 1

A substrate of samaria-doped ceria (SDC, Sm_{0.2}Ce_{0.8}O_{1.9} ceramic) with a thickness of 200 µm was used as the solid electrolyte substrate. An SDC paste containing 50% by weight of Sm_{0.5}Sr_{0.5}CoO₃ was printed as a cathode layer on one surface of this ceramic substrate, and an SDC paste, to which Li-doped NiO₂ containing 5% by weight of Rh₂O₃ was added in an amount of 40% by weight, was printed as an anode layer on the opposite surface thereof; then, the entire structure was calcined at 1200°C.

Next, a platinum mesh produced by welding platinum lead wires was embedded in each printed surface, and the resulting structure was calcined at 1200°C for one hour in the atmosphere, forming each mesh as a current collecting electrode as well as a crack preventing member, to complete the fabrication of the solid electrolyte fuel cell.

When the flame produced by the candle used as the solid fuel was applied to the anode layer of the thus fabricated solid electrolyte fuel cell, and the characteristics were evaluated, it was confirmed that the open-circuit voltage was 0.84 V and the output power density was 12 mW/cm². When a small amount of air was supplied to the vicinity of the wick of the candle, it was confirmed that the open-circuit voltage was 0.78 V and the output power density was 62 mW/cm². When dried wood pieces were used as the solid fuel, it was confirmed that the open-circuit voltage was 0.77 V and the output power density was 5 mW/cm².

### Working example 2

The power generating apparatus using the solid electrolyte fuel cell shown in Figure 4 was fabricated in this example. A substrate of samaria-doped ceria (SDC, Sm_{0.2}Ce_{0.8}O_{1.9} ceramic) with a thickness of 200 µm was used as the solid electrolyte substrate. An SDC paste containing 50% by weight of Sm_{0.5}Sr_{0.5}CoO₃ was printed as a cathode layer on one surface of this ceramic substrate, and an SDC paste, to which Li-doped NiO₂ containing 5% by weight of Rh₂O₃ was added in an amount of 40% by weight, was printed as an anode layer on the opposite surface thereof; then, the entire structure was calcined at 1200°C.

Next, a platinum mesh produced by welding platinum lead wires was embedded in each printed surface, and the resulting structure was calcined at 1200°C for one hour in the atmosphere, forming each mesh as a current collecting electrode as well as a crack preventing member, to complete the fabrication of the solid electrolyte fuel cell.

Wood pellets were used as the solid fuel to be supplied to the anode layer of the thus fabricated solid electrolyte fuel cell, and the pellets were heated by the heater while supplying air into the combustion chamber at a rate of 3000 cm³/minute. The flame produced by burning the volatile compounds extracted from the pellets was applied to the fuel cell, and the characteristics were evaluated. As a result, it was confirmed that the open-circuit voltage was 0.84 V and the output power density was 99 mW/cm².

As described above, according to the present invention, as the power generating apparatus was constructed by employing the solid electrolyte fuel cell comprising the cathode layer and the anode layer formed on opposite surfaces of the plate-like solid electrolyte substrate with provisions made to ensure that the flame produced by the combustion of the solid fuel is applied over the entire surface of the anode layer, power can be generated using a compact low-cost fuel cell that has high durability; furthermore, as a solid fuel is used, the power generating apparatus is easy to store and transport and thus provides a handy means for power generation.

## Claims

1. A power generating apparatus using a solid electrolyte fuel cell, comprising:
said solid electrolyte fuel cell which is fabricated by forming a cathode layer on one surface of a flat plate-like solid electrolyte substrate and an anode layer on a surface thereof opposite to said one surface; and
a solid fuel which is placed below said solid electrolyte fuel cell, and wherein
said power generating apparatus generates power by supplying a flame produced by combustion of said solid fuel to said anode layer, while supplying air to said cathode layer.

2. A power generating apparatus using a solid electrolyte fuel cell as claimed in claim 1, wherein said solid fuel is a wood material, a solid fuel made of paraffin, or a solid fuel made of alcohol.

3. A power generating apparatus using a solid electrolyte fuel cell as claimed in claim 1, wherein air is supplied to a burning portion of said solid fuel.

4. A power generating apparatus using a solid electrolyte fuel cell as claimed in claim 3, wherein said solid fuel is placed inside a combustion apparatus having an opening through which said flame is supplied to said anode layer.

5. A power generating apparatus using a solid electrolyte fuel cell as claimed in claim 4, wherein said combustion apparatus has an air intake opening.

6. A power generating apparatus using a solid electrolyte fuel cell as claimed in claim 3, wherein when said solid fuel is made of solid paraffin, air is supplied to said burning portion through a tube passed through said solid paraffin.

7. A power generating apparatus using a solid electrolyte fuel cell as claimed in claim 4, wherein said combustion apparatus comprises a heating means for heating said solid fuel and an air supply means for supplying air into said combustion apparatus, and wherein
said solid fuel is burned in the presence of said air to produce a volatile compound, and the flame produced by combustion of said volatile compound is supplied to said solid electrolyte fuel cell.
